# EUROPEAN PATENT SPECIFICATION

(11) **EP 2 371 630 B1**
(45) Date of publication and mention of the grant of the patent: **19.12.2012**
(21) Application number: 10158131.2
(22) Date of filing: 29.03.2010
(51) Int. Cl.: B60R 22/04, B60R 22/02, F16B 1/00

(54) **Seatbelt device**
Sicherheitsgurtvorrichtung
Dispositif de ceinture de sécurité

(43) Date of publication of application: 05.10.2011
(73) Proprietor: Honda Motor Co., Ltd., Tokyo 107-8556 (JP); Technische Universität Berlin, 10623 Berlin (DE)
(72) Inventor: Kerkeling, Christoph, Carl-Legien Strasse 30 63073 Offenbach/Am Main (DE); Eisenach, Alexander, 13355, Berlin (DE); Troesterer, Sandra, 10587, Berlin (DE)
(74) Representative: Trossin, Hans-Jürgen

(56) References cited:
- EP-A1- 2 055 539
- WO-A1-2004/009411
- DE-A1-102008 026 410

## Description

### BACKGROUND OF THE INVENTION

### Field of the Invention

The present invention relates to a seatbelt device which uses a pair of left and right seatbelts in order to restrain an occupant sitting on a seat of a vehicle.

### Description of the Related Art

A seatbelt device is a device which uses a seatbelt so as to protect an occupant when a vehicle enters an emergency state due to a collision or the like. In a general vehicle, a so-called three-point seatbelt device having three support points is used. However, in the three-point seatbelt device, a shoulder not supported by the seatbelt may move to the left or right in the event of a rollover or collision of a vehicle. For this reason, when a lateral acceleration acts on the vehicle, the movement amount of the occupant in a vehicle interior may increase. Thus, it is desirable to use a four-point seatbelt device because the occupant is more reliably restrained than in the case of the three-point seatbelt device. In recent years, for example, as disclosed in PCT Publication No. 2004/009411A1, the four-point seatbelt device has been improved.

The seatbelt device disclosed in PCT Publication WO2004/009411A1 also uses a pair of left and right seatbelts so as to restrain the occupant. An upper end of a first seatbelt is supported by an upper-right portion of a seat, and a lower end thereof is wound on a first retractor disposed at a lower-right position of the seat. The lower portion of the first seatbelt is provided with a buckle (female belt-engagement member). An upper end of a second seatbelt is wound on a second retractor disposed at an upper-left position of the seat. A tongue is provided in the upper portion of the second seatbelt. The lower end of the second seatbelt is fixed to a lower- left position of the seat. The upper end of the second seatbelt may be wound on the second retractor disposed at the left upper portion of the seat. A tongue (male belt-engagement member) is provided in the upper portion of the second seatbelt.

When the occupant sitting on the seat engages the left upper tongue with the lower-right buckle, the seatbelt device may be used as a general three-point seatbelt device. When the occupant grips the tongue fixed to the buckle and pulls the tongue to the center of the occupant's waist, the seatbelt device may be used as a four-point seatbelt device. In the seatbelt device, when the tongue is released from the buckle, the operation of restraining the occupant may be released.

However, in the seatbelt device disclosed in PCT Publication No. 2004/009411A1, when the tongue on the side of the second seatbelt engages the buckle on the side of the first seatbelt, the height of the buckle may increase due to the occupant's unintentional operation. That is, generally, since the occupant inserts the tongue into the buckle by approaching both hands to a position in front of the occupant while gripping the buckle using one hand and gripping the tongue using the other hand, the buckle may move upward during the operation.

Then, when the tongue engages the buckle in this state, the height of the engagement portion is located at a height (belly or chest) which is higher than the occupant's waist, and hence it is difficult to restrain the lower half of the body of the occupant. Particularly, when the seatbelt device is used as the four-point seatbelt device by pulling the engagement portion between the tongue and the buckle to the center of the waist, there is a tendency in that it is difficult to restrain the lower half of the body of the occupant.

DE 10 2008 026 410 A1 discloses a seatbelt device according to the preamble of claim 1.

### SUMMARY OF THE INVENTION

An object of the present invention is to provide a seatbelt device capable of improving the performance of restraining an occupant by engaging a male belt-engagement member with a female belt-engagement member at a sufficiently low position at a normal time.

In order to achieve the above-described object, according to a first aspect of the invention, there is provided a seatbelt device according to claim 1.

Accordingly, the female belt-engagement member is fixed to the support member by the engagement between the locking claw and the locking hole in front of the occupant engages the male belt-engagement member with the female belt-engagement member. Accordingly, at this time, the female belt-engagement member is maintained at a constant height. In this state, when the occupant grips the male belt-engagement member and inserts the male belt-engagement member into the insertion opening of the female belt-engagement member, the lock releasing mechanism releases the engagement between the locking claw and the locking hole. Accordingly, in this state, when the occupant pulls the male belt-engagement member to the center in front of the waist together with the female belt-engagement member, it is possible to use the seatbelt device as a four-point seatbelt device in a state where the male belt-engagement member and the female belt-engagement member are maintained at a sufficiently low position.

According to a second aspect, in the seatbelt device according to the first aspect, the support member includes a guide groove into which the female belt-engagement member is inserted; the locking hole is provided in each of walls provided on the support member and facing each other so as to form the guide groove; and the locking claw is provided in each surface corresponding to the wall and provided on the female belt-engagement member.

Accordingly, when the female belt-engagement member is inserted into the guide groove on the support member, the locking claws on both surfaces of the female belt-engagement member engage the corresponding locking holes of the walls of the guide groove.

According to a third aspect, in the seatbelt device according to the first or second aspect, the first retractor winding one end of the first seatbelt is to be disposed at one position located at the upper portion of the seat and located on the same side of the support member.

Accordingly, in a state where the seatbelt device is used as the four-point seatbelt device, when the engagement between the male belt-engagement member and the female belt-engagement member is released, the first seat belt is wound on the first retractor, thereby approaching the female belt-engagement member to the support member.

According to the first aspect of the invention, in a state where the female belt-engagement member is fixed to the support member due to the engagement between the locking claw and the locking hole, the movement of the female belt-engagement member is restrained by the support member unless the male belt-engagement member is inserted into the insertion opening of the female belt-engagement member. For this reason, when the occupant engages the male belt-engagement member with the female belt-engagement member upon using the seatbelt device, the female belt-engagement member is normally maintained at a constant height. Accordingly, since the male belt-engagement member normally engages the female belt-engagement member at a constant height, it is possible to reliably improve the performance of restraining the occupant, and particularly, the performance of restraining the lower half of the body of the occupant.

According to the second aspect of the invention, the locking holes are respectively provided in the facing walls of the guide groove of the support member, and the locking holes are provided so as to correspond to the locking claws of the female belt-engagement member. Accordingly, it is possible to further reliably ensure the engagement between the female belt-engagement member and the support member.

According to the third aspect of the invention, when the engagement between the male belt-engagement member and the female belt-engagement member is released, the first seatbelt is wound on the first retractor, thereby approaching the female belt-engagement member to the support member. Accordingly, it is possible to easily engage the female belt-engagement member with the support member, and thus to improve the user's operability.

### BRIEF DESCRIPTION OF THE DRAWINGS

FIG. 1 is a front view illustrating a part of a vehicle and a seatbelt device according to an embodiment of the invention.
FIG. 2 is a perspective view of a support member, a female belt-engagement member, and a male belt-engagement member which are used in the seatbelt device according to the embodiment of the invention.
FIG. 3 is a sectional view corresponding to the section A-A of FIG. 2 of the seatbelt device according to the embodiment of the invention.
FIG. 4 is a sectional view corresponding to the section A-A of FIG. 2 of the seatbelt device according to the embodiment of the invention.
FIG. 5 is a schematic configuration diagram of the seatbelt device according to the embodiment of the invention.
FIG. 6 is a schematic configuration diagram of the seatbelt device according to the embodiment of the invention.
FIG. 7 is a schematic configuration diagram of the seatbelt device according to the embodiment of the invention.
FIG. 8 is a schematic configuration diagram of the seatbelt device according to the embodiment of the invention.

### DETAILED DESCRIPTION OF THE INVENTION

Hereinafter, an exemplary embodiment of the present invention will be described with reference to the accompanying drawings.

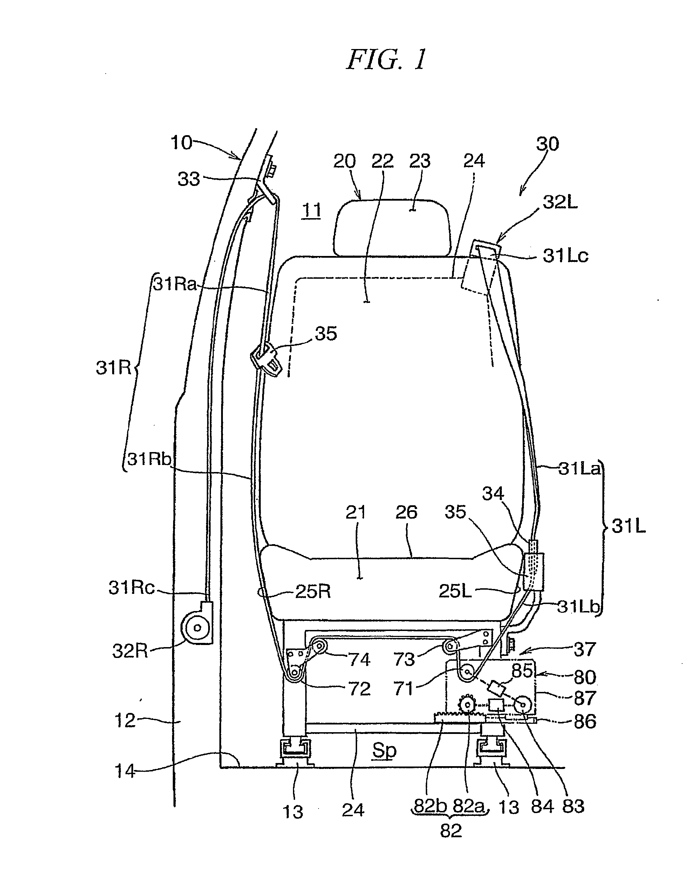

FIG. 1 shows a vehicle 10 such as an automobile. The vehicle 10 includes a seat 20 which is disposed in a vehicle interior 11 and a seatbelt device 30 which is used to restrain an occupant sitting on the seat 20. In addition, in the following description, the vertical direction or the longitudinal direction indicate the vertical direction or the longitudinal direction of the vehicle 10 unless any particular remark is made.

The seat 20 includes a seat cushion 21, a seatback 22, a headrest 23, and a seat frame 24. The seat frame 24 is attached with the seat cushion 21, the seatback 22, and the headrest 23. The seat frame 24 is attached to a vehicle body 12 through seat rails 13 and 13 so as to be slidable in the longitudinal direction of the vehicle body. A predetermined space Sp is provided between the seat cushion 21 and a floor 14 of the vehicle body 12.

As shown in FIG. 1, the seatbelt device 30 is a so-called four-point seatbelt device, and a pair of left and right seatbelts 31L and 31R is supported by four support points. The seatbelt device 30 includes first and second seatbelts 31L and 31R, first and second retractors 32L and 32R, a shoulder anchor 33, a female belt-engagement member 34, a male belt-engagement member 35, a support member 36, and a lap belt pulling mechanism 37.

The first seatbelt device 31L includes a first shoulder belt portion 31La which is disposed on one side (for example, the left in the vehicle traveling direction) of the left and right of the seat 20 and restrains the occupant's shoulder, and a first lap belt portion 31Lb which restrains the occupant's waist. The second seatbelt device 31R includes a second shoulder belt portion 31Ra which is disposed on the other side (for example, the right in the vehicle traveling direction) of the left and right of the seat 20 and restrains the occupant's shoulder, and a second lap belt portion 31Rb which restrains the occupant's waist.

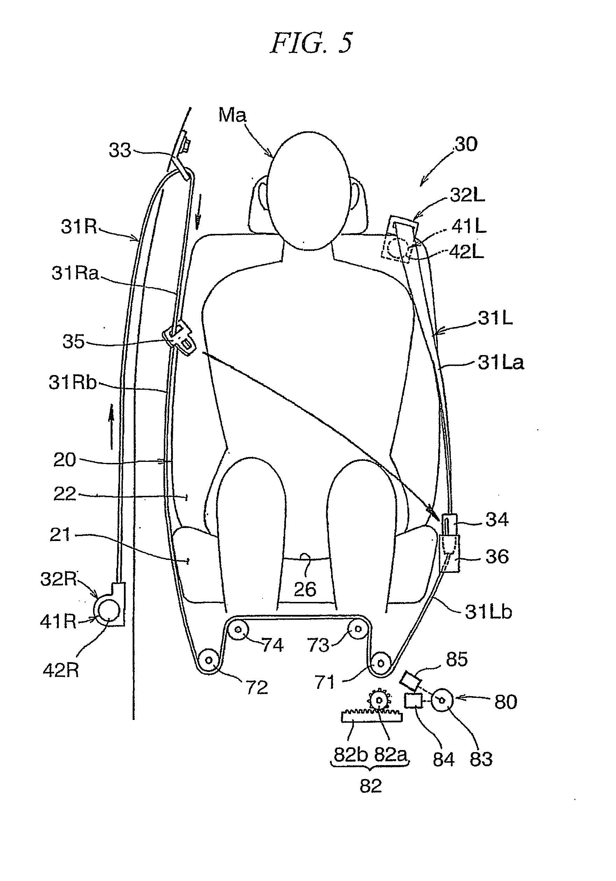

The first retractor 32L is disposed at the upper end of one side of the seatback 22 and is attached to the seat frame 24 so as to wind up one end 31Lc (the upper end of the first shoulder belt portion 31La) of the first seatbelt device 31L. The first retractor 32L includes a first electric shoulder pretensioner 41L (refer to FIGS. 5 to 8). The first electric shoulder pretensioner 41L includes a first electric motor 42L (refer to FIGS. 5 to 8). When the vehicle 10 enters an emergency state due to a collision or the like, the first electric shoulder pretensioner 41L pulls the first shoulder belt portion 31La through a driving force of the first electric motor 42L. As a result, the loosened portion of the first seatbelt 31L is wound on the first retractor 32L.

The second retractor 32R is attached to the side wall of the vehicle body 12 so as to wind up one end 31Rc (the lower end of the second shoulder belt portion 31Ra) of the second seatbelt 31R. The second retractor 32R includes a second electric shoulder pretensioner 41R (refer to FIGS. 5 to 8). The second electric shoulder pretensioner 41R includes a second electric motor 42R (refer to FIGS. 5 to 8). When the vehicle 10 enters an emergency state, the second electric shoulder pretensioner 41R pulls the second shoulder belt portion 31Ra through a driving force of the second electric motor 42R. As a result, the loosened portion of the second seatbelt 31R is wound on the second retractor 32R.

The shoulder anchor 33 is disposed at the upper portion of the second retractor 32R and is attached to the inner surface of the side wall of the vehicle body 12. The shoulder anchor 33 guides the second shoulder belt portion 31Ra toward the second retractor 32R.

The second seatbelt 31R is provided so as to be continuous to the first seatbelt 31L. In detail, the first lap belt portion 31Lb and the second lap belt portion 31Rb are connected to each other as an integrated unit.

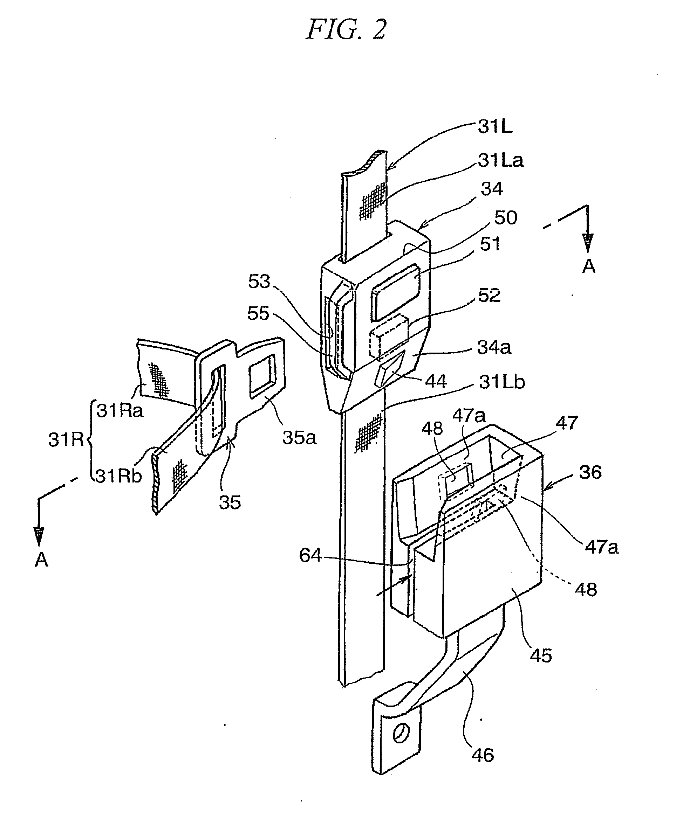

As shown in FIGS. 1 and 2, the female belt-engagement member 34 is attached to the intermediate portion of the first seatbelt 31L, that is, a portion between the first shoulder belt portion 31La and the first lap belt portion 31Lb. The male belt-engagement member 35 is slidably attached to the intermediate portion of the second seatbelt 31R, that is, a portion between the second shoulder belt portion 31Ra and the second lap belt portion 31Rb, and further includes a tongue 35a as an engagement portion.

The female belt-engagement member 34 has a general structure including an insertion opening 53 into which the tongue 35a of the male belt-engagement member 35 is inserted, a latch (not shown), a release button 51, and an engagement sensor 52. The latch locks the tongue 35a of the male belt-engagement member 35 inserted into the insertion opening 53. The release button 51 for releasing the lock state of the latch is manually operated. The first engagement sensor 52 detects a state (the tongue 35a is locked by the latch) in which the male belt-engagement member 35 engages the female belt-engagement member 34, and includes, for example, a micro switch. The male belt-engagement member 35 detachably engages the female belt-engagement member 34.

In addition, as shown in FIGS. 1 and 2, the support member 36 is disposed in one side portion of the seat cushion 21 and is fixed to the vehicle body 12 through the seat frame 24. The female belt-engagement member 34 detachably engages the support member 36. Accordingly, the female belt-engagement member 34 is able to be fixed to the vehicle body 12 through the support member 36 and the seat frame 24.

In detail, in the female belt-engagement member 34, the insertion opening 53 is provided in one side portion of a body block 50 so as to allow the tongue 35a to be inserted thereinto, and a handle 55 is provided so that the occupant grips the handle. In addition, a taper portion 34a is provided in the lower portion of the body block 50 so as to be tapered downward, and locking claws 44 are provided on both front and rear surfaces of the taper portion 34a so as to be able to reciprocate. A mechanism for reciprocating the locking claws 44 will be described later.

The support member 36 has a configuration in which a bracket 46 extends from a rectangular parallelepiped support block 45 so as to fix the support block 45 to the seat frame 24. In addition, the support block 45 includes a slit 64 which perforates the support block 45 in the vertical direction so as to be opened toward one side thereof and a guide groove 47 which receives the entrance of the taper portion 34a of the female belt-engagement member 34. The slit 64 allows the first lap belt portion 31Lb connected to the female belt-engagement member 34 to be inserted therethrough. The guide groove 47 is provided so as to communicate with the upper portion of the slit 64 and is opened to one side and the upper portion of the support block 45. In addition, each of a pair of walls 47a facing each other and forming the guide groove 47 has a taper-shaped inner surface so as to correspond to the taper portion 34a of the female belt-engagement member 34 (while having substantially the same shape). In addition, the inner surface of each of the walls 47a forming the guide groove 47 is provided with a locking hole 48 with which each of the locking claws 44 of the front and rear surfaces of the taper portion 34a of the female belt-engagement member 34 engages.

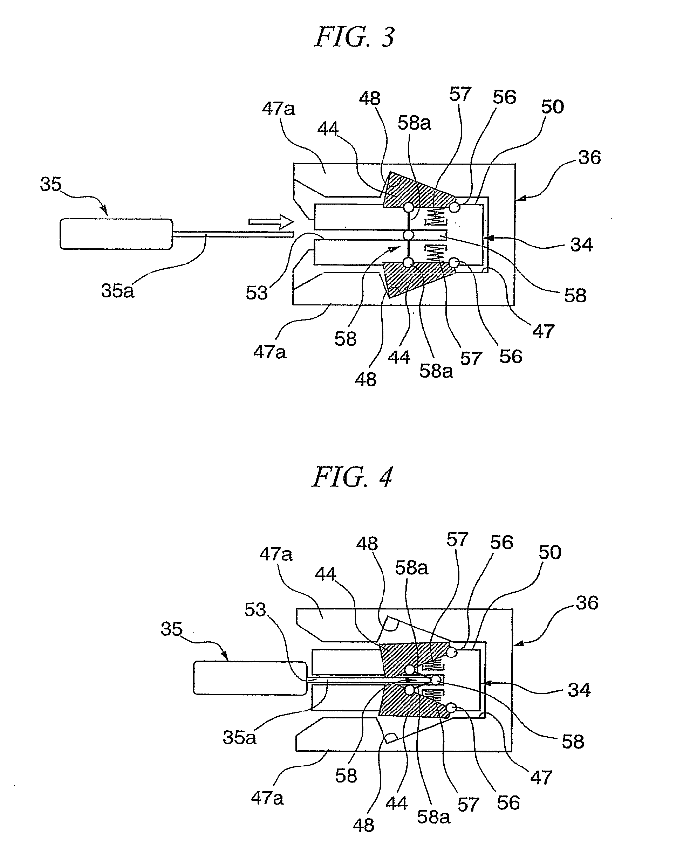

FIGS. 3 and 4 show the inner structure of the female belt-engagement member 34 and the support member 36.

As shown in the drawings, each of the locking claws 44 provided in both front and rear surfaces in the thickness direction of the female belt-engagement member 34 is substantially formed as a wedge shape, and one end of the taper side is supported by the body block 50 through the support shaft 56 so as to be oscillatable. Accordingly, the end of the thick side of each locking claw 44 is adapted to move inward or outward in accordance with this configuration. In addition, each locking claw 44 is urged in a protruding direction of the spring 57 and is connected to a lock releasing link 58.

The lock releasing link 58 constitutes a lock releasing mechanism for releasing a lock state between the locking claw 44 and the locking hole 48, and includes a pair of levers 58a rotatably connected to each other through a connection shaft 58b of the intermediate portion, where the end of each lever 58a is rotatably connected to each locking claw 44. In a state where the tongue 35a of the male belt-engagement member 35 is not inserted into the insertion opening 53, the levers 58a of the lock releasing link 58 extend in a linear shape as shown in FIG. 3 so as to permit the protrusion of both locking claws 44. Accordingly, when the body block 50 (the taper portion 34a) of the female belt-engagement member 34 is inserted into the guide groove 47 of the support member 36 in this state, each locking claw 44 protrudes from the corresponding locking hole 48 due to the urging force of the spring 57, thereby maintaining the fitting state between each locking claw 44 and the corresponding locking hole 48.

In addition, the connection shaft 58b of the lock releasing link 58 is disposed inside the insertion opening 53 of the body block 50 and is pressed by the front end of the tongue 35a when the tongue 35a of the male belt-engagement member 35 is inserted into the insertion opening 53. As shown in FIG. 4, when the tongue 35a is inserted into the insertion opening 53 so that the front end of the tongue 35a presses the connection shaft 58b, the levers 58a are folded about the connection shaft 58b so as to retreat the locking claws 44. Accordingly, at this time, the engagement state between each locking claw 44 and the locking hole 48 is released, so that the female belt-engagement member 34 can be freely moved.

Furthermore, in a state where each locking claw 44 protrudes, each locking claw 44 is tapered toward a direction in which the female belt-engagement member 34 is inserted into the support member 36 (a direction depicted by the arrow S in FIG. 3).

Incidentally, the lap belt pulling mechanism 37 shown in FIG. 1 includes a plurality of belt guide members 71 to 74 and an electric lap pretensioner 80. The plurality of belt guide members 71 to 74 and the electric lap pretensioner 80 are independent from the first and second retractors 32L and 32R, and are provided in the seat frame 24.

The plurality of belt guide members 71 to 74 guides the first lap belt portion 31Lb and the second lap belt portion 31Rb below the seat 20. Each of the plurality of belt guide members 71 to 74 is disposed in a space Sp below the seat surface in the vicinity of the left and right ends of the seat 20. Each of the plurality of belt guide members 71 to 74 includes rollers, and each of the rollers is rotatably supported by the seat frame 24 by a shaft 75. The shafts 75 are arranged in parallel so as to extend in the longitudinal direction of the vehicle body.

Four belt guide members 71 to 74 are provided, and the first belt guide member 71 and the second belt guide member 72 are disposed at positions in the vicinity of the outer portions of the seat cushion 21. The third belt guide member 73 and the fourth belt guide member 74 are disposed above the first and second belt guide members 71 and 72 so as to be located on the inside in the width direction. The first lap belt portion 31Lb is guided to a position below the seat 20 by the first belt guide member 71 and is guided to an upper position by the third belt guide member 73 toward the center in the width direction of the seat. The second lap belt portion 31Rb is guided to a position below the seat 20 by the second belt guide member 72 and is guided to an upper position by the fourth belt guide member 74 toward the center in the width direction of the seat.

On the other hand, the electric lap pretensioner 80 is adapted to retract or draw out the first and second seatbelts 31L and 31R through the first and second lap belt portions 31Lb and 31Rb. The electric lap pretensioner 80 pulls the first and second lap belt portions 31Lb and 31Rb to a position below the seat 20 so as to restrain the occupant's waist in a state where the male belt-engagement member 35 engages the female belt-engagement member 34. The electric lap pretensioner 80 includes a slider 81, a rack and pinion mechanism 82, a third electric motor 83, and first and second electric clutches 84 and 85.

The slider 81 is attached to the seat frame 24 through a rail 86 so as to be slidable in the width direction of the vehicle. The slider 81 is attached with the first belt guide member 71, a pinion 82a of the rack and pinion mechanism 82, the third electric motor 83, and the first and second electric clutches 84 and 85. Accordingly, when the slider 81 slides in the width direction of the vehicle, the first belt guide member 71, the pinion 82a, the third electric motor 83, and the first and second electric clutches 84 and 85 also slide in the width direction of the vehicle.

A rack 82b of the rack and pinion mechanism 82 is disposed in parallel to the rail 86 and is attached to the seat frame 24. The pinion 82a is attached to the slider 81 so as to rotate while meshing with the rack 82b. In addition, the third electric motor 83 is adapted to transmit a driving force to the first belt guide member 71 and the pinion 82a. The first belt guide member 71 is operated to be reciprocated in the width direction of the vehicle by the third electric motor 83, so that the first and second lap belt portions 31Lb and 31Rb are wound forward or backward.

The first electric clutch 84 is adapted to enable or disable an operation of transmitting a driving force from the third electric motor 83 to the pinion 82a. The first electric clutch 84 has, for example, a structure which includes a planetary gear mechanism (not shown) and an electromagnet. In the planetary gear mechanism, the driving force of the third electric motor 83 is input to the sun gear at the center and is output from a plurality of gear components to the pinion 82a through a carrier.

Unless a solenoid is excited, the outer gear of the planetary gear mechanism is rotatable. Accordingly, the first electric clutch 84 enters an OFF state, and the driving force of the third electric motor 83 is not transmitted to the pinion 82a. At this time, since the pinion 82a is in a stop state, the slider 81 is also in a stop state. For this reason, the position of the first belt guide member 71 is fixed so as not to move in the width direction of the vehicle.

On the contrary, when the solenoid is excited, the rotation of the outer gear is limited. Accordingly, the first electric clutch 84 enters an ON state, and the driving force of the third electric motor 83 is transmitted to the pinion 82a. At this time, the pinion 82a rotates so that the slider 81 moves in the width direction of the vehicle. Accordingly, the first belt guide member 71 moves in the width direction of the vehicle.

In addition, the second electric clutch 85 has the same structure as that of the first electric clutch 84 and is adapted to enable or disable a power transmitting system between the third electric motor 83 and the first belt guide member 71.

Next, an operation of the seatbelt device 30 will be described with reference to FIGS. 5 to 8.

FIG. 5 shows a state where the occupant Ma sits on the seat 20 and the seatbelt device 30 is not used yet, that is, a state where the male belt-engagement member 35 does not engage the female belt-engagement member 34. At this time, the third electric motor 83 and the first and second electric clutches 84 and 85 enter an OFF state, and the electric lap pretensioner 80 is mechanically detached from the first and second lap belt portions 31Lb and 31Rb. At this time, each end of the first and second seatbelts 31L and 31R is pulled toward the first and second retractors 32L and 32R by a weak force.

In addition, at this time, the female belt-engagement member 34 is inserted into the guide groove 47 of the support member 36, and each of the pair of locking claws 44 on the side of the female belt-engagement member 34 is fitted to each corresponding locking holes 48 on the side of the support member 36 as shown in FIG. 3 (lock state). Here, since each locking claw 44 is urged by the spring 57 in a protruding direction, even when the female belt-engagement member 34 is just pushed, the female belt-engagement member 34 is not separated from the support member 36.

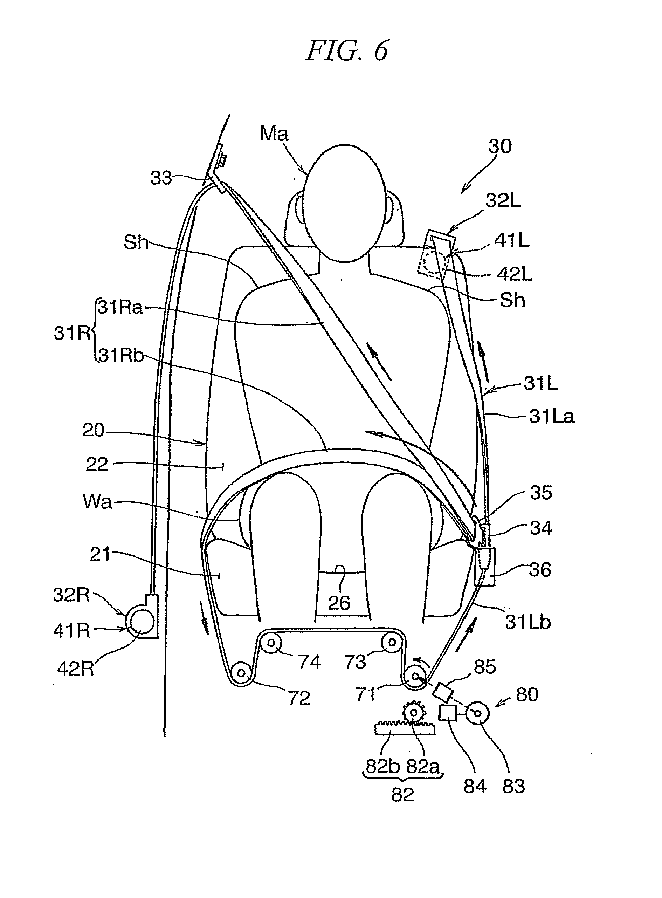

In the case of using the seatbelt device 30 in this state, the occupant Ma extracts the second seatbelt 31R by gripping the male belt-engagement member 35 using a right hand, approaches the male belt-engagement member 35 to the female belt-engagement member 34 held by the support member 36, and inserts the tongue 35a of the male belt-engagement member 35 into the insertion opening 53 of the female belt-engagement member 34 so that the tongue 35a engages the latch (refer to FIG. 6).

In this manner, when the tongue 35a is inserted into the insertion opening 53, the tongue 35a inside the insertion opening 53 presses the connection shaft 58b of the lock releasing link 58 as shown in FIG. 4, and hence both locking claws 44 move to the inside of the body block 50 against the force of the spring 57. As a result, the engagement between each locking claw 44 and the locking hole 48 is released, so that the lock state between the female belt-engagement member 34 and the support member 36 is released.

Next, in this state, the occupant Ma grips the handle 55 (refer to FIG. 2) of the female belt-engagement member 34 using their right hand, and pulls the female belt-engagement member 34 to a position in the vicinity of the center in front of the waist Wa of the occupant Ma together with the male belt-engagement member 35. At this time, as depicted by the arrow of FIG. 6, the end of the first lap belt portion 31Lb on the side of the female belt-engagement member 34 is pulled upward, and the second lap belt portion 31Rb is pulled toward a position below the seat 20, so that the first lap belt portion 31Lb and the second lap belt portion 31Rb on the side of the seat cushion 21 and the waist Wa of the occupant Ma rotate.

In addition, at this time, in the electric lap pretensioner 80, the third electric motor 83 and the second electric clutch 85 are operated so as to rotate the first belt guide member 71, thereby assisting the movement of the first and second lap belt portions 31Lb and 31Rb around the waist Wa. In this case, the third electric motor 83 and the second electric clutch 85 enter an OFF state when the female belt-engagement member 34 and the male belt-engagement member 35 are located at the center position of the waist Wa of the occupant Ma.

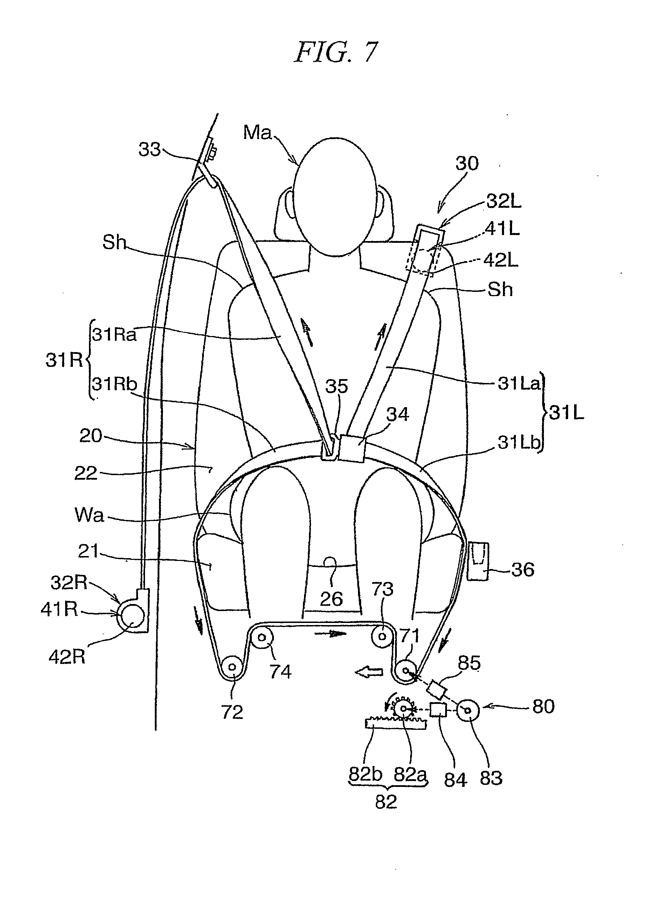

In this manner, when the female belt-engagement member 34 and the male belt-engagement member 35 move to the center position in front of the waist Wa of the occupant Ma as shown in FIG. 7, the first seatbelt 31L and the second seatbelt 31R form an X shape with respect to both engagement members 34 and 35 when seen from the front side, thereby supporting the occupant Ma at four points. In detail, the occupant Ma is supported by the first retractor 32L, the shoulder anchor 33, and the first and second belt guide members 71 and 72. Accordingly, the left and right shoulders Sh of the occupant Ma are restrained by the first and second shoulder belt portions 31La and 31Ra, and the waist Wa of the occupant Ma is restrained by the first and second lap belt portions 31Lb and 31Rb.

In addition, in this manner, when the seatbelt device 30 is used in a four-point support state, if there is a case in which the first and second lap belt portions 31Lb and 31Rb are loosened or the vehicle 10 enters an emergency state due to a collision or the like, the first and second electric clutches 84 and 85 and the third electric motor 83 of the electric lap pretensioner 80 are turned on. Accordingly, the electric lap pretensioner 80 is mechanically connected to the first and second lap belt portions 31Lb and 31Rb. At this time, the driving force of the third electric motor 83 is transmitted to the pinion 82a, and hence the first belt guide member 71 is operated to the inside in the width direction of the seat (a direction depicted by the arrow CL). Accordingly, when the first belt guide member 71 moves to the inside in the width direction of the seat, the first and second lap belt portions 31Lb and 31Rb are pulled to a position below the seat 20 through the first belt guide member 71. As a result, the waist Wa of the occupant Ma is restrained by the first and second lap belt portions 31Lb and 31Rb.

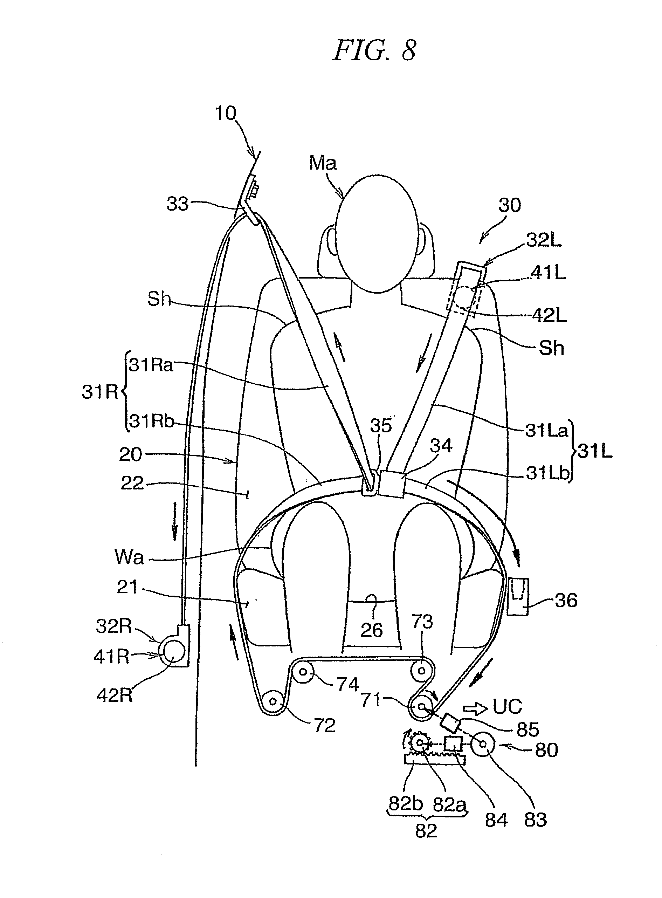

Furthermore, in the case of releasing the seatbelt device 30 in a four-point support state, when the occupant Ma presses the release button 51 of the female belt-engagement member 34, the engagement between the tongue 35a and the latch (the male belt-engagement member 34 and the female belt-engagement member 35) is released. In this manner, when the engagement between the tongue 35a and the latch is released, this state is detected by the engagement sensor 52, and an operation signal is output to the first and second electric clutches 84 and 85 and the third electric motor 83 of the electric lap pretensioner 80. At this time, the pinion 82a is driven in the reverse direction depicted by the arrow in FIG. 8, and the first belt guide member 71 is operated to the outside (depicted by the arrow UC) in the width direction of the seat. In this manner, when the first belt guide member 71 moves to the outside in the width direction of the seat, the pulling operation of the first and second lap belt portions 31Lb and 31Rb is released. In addition, at this time, the ends of the first and second shoulder belt portions 31La and 31Ra are wound on the first and second retractors 32L and 32R, so that the female belt-engagement member 34 and the male belt-engagement member 35 are respectively returned to substantially the initial position.

Incidentally, when the first shoulder belt portion 31La is wound on the first retractor 32L as described above upon releasing the seatbelt device 30, since the first retractor 32L is disposed in the vicinity (a portion on the same side of the support member 36) of a position directly above the support member 36 of the upper portion of the seatback 22, the female belt-engagement member 34 stops in the vicinity of the support member 36. For this reason, when the female belt-engagement member 34 is lightly pressed into the guide groove 47 of the support member 36 in front of the occupant gets out of the seat, the locking claw 44 of the female belt-engagement member 34 engages the corresponding locking hole 48, thereby fixing the female belt-engagement member 34 to a predetermined sufficient low position.

As described above, in the seatbelt device 30, the female belt-engagement member 34 is locked to the support member 36 by the engagement between the locking claw 44 and the locking hole 48, and the lock state is not released unless the tongue 35a of the male belt-engagement member 35 is inserted into the insertion opening 53 of the female belt-engagement member 34. For this reason, in the case of using the seatbelt device, when the occupant Ma inserts the tongue 35a into the insertion opening 53, the female belt-engagement member 34 is normally maintained at the predetermined position.

Accordingly, when the tongue 35a is inserted into the insertion opening 53, the occupant Ma cannot unintentionally press up the female belt-engagement member 34.

Even when the seatbelt device is used in a four-point support state by moving the female belt-engagement member 34 and the male belt-engagement member 35 connected to each other to a the center in front of the waist Wa of the occupant Ma, it is possible to maintain both engagement members 34 and 35 to be located at a sufficiently low position in front of the waist Wa of the occupant Ma. Accordingly, in the seatbelt device 30, it is possible to reliably improve the performance of restraining the occupant Ma, and particularly, the performance of restraining the lower half of the body of the occupant Ma.

In addition, in the seatbelt device 30, the locking holes 48 are respectively provided in the facing walls 47a of the guide groove 47 of the support member 36, and the locking claws 44 corresponding to the locking holes 48 are provided in the front and rear surfaces of the taper portion 34a of the female belt-engagement member 34. Accordingly, there is an advantage in that it is possible to further reliably ensure the engagement between the female belt-engagement member 34 and the support member 36.

Furthermore, in the seatbelt device 30, the first retractor 32L winding the upper end of the first shoulder belt portion 31La is disposed at one position of the upper portion of the seatback 22 on the same side of the support member 36. Accordingly, the female belt-engagement member 34 can be easily engaged with the support member 36 again by the occupant Ma upon getting out for the vehicle, and hence there is an advantage in that operability is satisfactory.

While preferred embodiments of the present invention have been described and illustrated above, it should be understood that these are exemplary of the present invention and are not to be considered as limiting. Additions, omissions, substitutions, and other modifications can be made without departing from the scope of the present invention. Accordingly, the present invention is not to be considered as being limited by the foregoing description and is only limited by the scope of the appended claims.

## Claims

1. A seatbelt device adapted to restrain an occupant sitting on a seat of a vehicle, the seatbelt device comprising:
a first seatbelt (31L) which is to be provided on a first side of the seat so as to extend downward from an upper portion of the seat;
a first retractor (32L) which winds one end of the first seatbelt (31L);
a second seatbelt (31R) which is to be provided on a second side of the seat so as to extend downward from the upper portion of the seat;
a second retractor (32R) which winds one end of the second seatbelt (31R);
a female belt-engagement member (34) which is attached to a position in the middle of the first seatbelt (31L);
a male belt-engagement member (35) which is attached to a position in the middle of the second seatbelt (31R) and is adapted to be attached to or detached from the female belt-engagement member (34); and
a support member (36) which is to be fixed to the seat or vehicle body on the first side of the seat, and supports the female belt-engagement member (34) to a predetermined position when the male belt-engagement member (35) does not engage the female belt-engagement member (34),
wherein the female belt-engagement member (34) includes:
an insertion opening (53) into which the male belt-engagement member (35) is inserted for an engagement; **characterized in that** the support member (36) includes a locking hole (48) which locks an engagement state of the female belt-engagement member (34) further includes
a locking claw (44) which detachably engages the locking hole (48) of the support member (36); and
a lock releasing mechanism (58) which releases the engagement between the locking claw (44) and the locking hole (48) when the male belt-engagement member (35) is inserted into the insertion opening (53).

2. The seatbelt device according to claim 1,
wherein the support member (36) includes a guide groove (47) into which the female belt-engagement member (34) is inserted,
wherein the locking hole (48) is provided in each of walls (47a) provided on the support member (36) and facing each other so as to form the guide groove (47), and
wherein the locking claw (44) is provided in each surface corresponding to the wall (47a) and provided on the female belt-engagement member (34).

3. The seatbelt device according to claim 1 or 2,
wherein the first retractor (32L) winding one end of the first seatbelt (31L) is to be disposed at one position located at the upper portion of the seat and located on the same side of the support member (36).

## Patentansprüche

1. Sicherheitsgurtvorrichtung, die dazu ausgelegt ist, einen auf einem Sitz eines Fahrzeugs sitzenden Insassen zurückzuhalten, wobei die Sicherheitsgurtvorrichtung umfasst:
einen ersten Sicherheitsgurt (31 L), der an einer ersten Seite des Sitzes so vorzusehen ist, dass er sich von einem oberen Abschnitt des Sitzes nach unten erstreckt;
einen ersten Retraktor (32L), der ein Ende des ersten Sicherheitsgurts (31 L) aufwickelt;
einen zweiten Sicherheitsgurt (31 R), der an einer zweiten Seite des Sitzes so vorzusehen ist, dass er sich von dem oberen Abschnitt des Sitzes nach unten erstreckt;
einen zweiten Retraktor (32R), der ein Ende des zweiten Sicherheitsgurts (31 R) aufwickelt;
ein weibliches Gurteingriffselement (34), das an einer Position in der Mitte des ersten Sicherheitsgurts (31 L) angebracht ist;
ein männliches Gurteingriffselement (35), das an einer Position in der Mitte des zweiten Sicherheitsgurts (31 R) angebracht ist und dazu ausgelegt ist, an dem weiblichen Gurteingriffselement (34) angebracht oder davon gelöst zu werden; und
ein Stützelement (36), das am Sitz oder Fahrzeugkörper an der ersten Seite des Sitzes zu befestigen ist und das weibliche Gurteingriffselement (34) zu einer vorbestimmten Position stützt, wenn das männliche Gurteingriffselement (35) nicht mit dem weiblichen Gurteingriffselement (34) in Eingriff steht, und
worin das weibliche Gurteingriffselement (34) enthält:
eine Einsetzöffnung (53), in die das männliche Gurteingriffselement (35) zum Eingriff eingesetzt wird,
**dadurch gekennzeichnet dass**
das Stützelement (36) ein Sperrloch (38) enthält, das einen Eingriffszustand des weiblichen Gurteingriffselements (34) sperrt, und
dass das weibliche Gurteingriffselement (34) ferner enthält:
eine Sperrklaue (44), die mit dem Sperrloch (48) des Stützelements (36) lösbar in Eingriff steht; und
einen Sperrlösemechanismus (58), der den Eingriff zwischen der Sperrklaue (44) und de Sperrloch (48) löst, wenn das männliche Gurteingriffselement (35) in die Einsetzöffnung (53) eingesetzt ist.

2. Die Sicherheitsgurtvorrichtung nach Anspruch 1,
worin das Stützelement (36) eine Führungsnut (47) enthält, in die das weibliche Gurteingriffselement (34) eingesetzt wird,
worin das Sperrloch (48) in jeder von Wänden (47a) vorgesehen ist, die an dem Stützelement (36) vorgesehen sind und zur Bildung der Führungsnut (47) einander gegenüberliegen, und
worin die Sperrklaue (44) in jeder der Wand (47a) entsprechenden Oberfläche vorgesehen ist und an dem weiblichen Gurteingriffselement (34) vorgesehen ist.

3. Die Sicherheitsgurtvorrichtung nach Anspruch 1 oder 2,
worin der erste Retraktor (32L), der ein Ende des ersten Sicherheitsgurts (31 L) aufwickelt, an einer Position anzuordnen ist, die an dem oberen Abschnitt des Sitzes angeordnet ist und an der gleichen Seite des Stützelements (36) angeordnet ist.

## Revendications

1. Dispositif de ceinture de sécurité adapté pour retenir un occupant assis sur un siège d'un véhicule, le dispositif de ceinture de sécurité comprenant :
une première ceinture de sécurité (31L) qui doit être prévue sur un premier côté du siège afin de s'étendre vers le bas à partir d'une partie supérieure du siège ;
un premier enrouleur (32L) qui enroule une extrémité de la première ceinture de sécurité (31L) ;
une seconde ceinture de sécurité (31R) qui doit être prévue sur un second côté du siège afin de s'étendre vers le bas à partir de la partie supérieure du siège ;
un second enrouleur (32R) qui enroule une extrémité de la seconde ceinture de sécurité (31R) ;
un élément de mise en prise de ceinture femelle (34) qui est fixé dans une position, au milieu de la première ceinture de sécurité (31L) ;
un élément de mise en prise de ceinture mâle (35) qui est fixé dans une position, au milieu de la seconde ceinture de sécurité (31R) et est adapté pour être attaché à ou détaché de l'élément de mise en prise de ceinture femelle (34) ; et
un élément de support (36) qui doit être fixé sur le siège ou la carrosserie de véhicule, sur le premier côté du siège, et supporte l'élément de mise en prise de ceinture femelle (34) dans une position prédéterminée lorsque l'élément de mise en prise de ceinture mâle (35) ne met pas en prise l'élément de mise en prise de ceinture femelle (34), et
dans lequel l'élément de mise en prise de ceinture femelle (34) comprend :
une ouverture d'insertion (53) dans laquelle l'élément de mise en prise de ceinture mâle (35) est inséré pour une mise en prise, **caractérisé en ce que** l'élément de support (36) comprend un trou de verrouillage (48) qui verrouille un état de mise en prise de l'élément de mise en prise de ceinture femelle (34), et **en ce que** l'élément de mise en prise de ceinture femelle (34) comprend en outre :
une griffe de verrouillage (44) qui met en prise de manière détachable le trou de verrouillage (48) de l'élément de support (36) ; et
un mécanisme de déblocage (58) qui débloque la mise en prise de la griffe de verrouillage (44) et du trou de verrouillage (48) lorsque l'élément de mise en prise de ceinture mâle (35) est inséré dans l'ouverture d'insertion (53).

2. Dispositif de ceinture de sécurité selon la revendication 1,
dans lequel l'élément de support (36) comprend une rainure de guidage (47) dans laquelle l'élément de mise en prise de ceinture femelle (34) est inséré,
dans lequel le trou de verrouillage (48) est prévu dans chacune des parois (47a) prévues sur l'élément de support (36) et se faisant face afin de former la rainure de guidage (47), et
dans lequel la griffe de verrouillage (44) est prévue dans chaque surface correspondant à la paroi (47a) et prévue sur l'élément de mise en prise de ceinture femelle (34).

3. Dispositif de ceinture de sécurité selon la revendication 1 ou 2,
dans lequel le premier enrouleur (32L) enroulant une extrémité de la première ceinture de sécurité (31L) doit être disposé dans une position située au niveau de la partie supérieure du siège et positionné du même côté de l'élément de support (36).
